# EUROPÄISCHE PATENTANMELDUNG

(11) **EP 1 291 703 A2**
(43) Veröffentlichungstag der Anmeldung: **12.03.2003**
(21) Anmeldenummer: 02018502.1
(22) Anmeldetag: 16.08.2002
(51) Int. Cl.: G02F 1/03

(54) **Anordnung zur schnellen elektrooptischen Amplituden- oder Phasen-Modulation von polarisiertem Laserlicht**

(30) Priorität: 29.08.2001 DE 10142255
(71) Anmelder: Schepers GmbH, 48691 Vreden (DE)
(72) Erfinder: Hennig, Guido, Dr., 4923 Wynan (CH); Zellmer, Holger, Dr., 99441 Magdala (DE); Bruning, Stephan, 48631 Vreden (DE)
(74) Vertreter: Schulze Horn & Partner GbR

(57) **Zusammenfassung**

Die Erfindung betrifft eine Anordnung (1) zur schnellen elektro-optischen Amplituden- oder Phasen-Modulation von polarisiertem Laserlicht, mit zwei im Laserstrahlweg (10) angeordneten Modulatorkristallen (21, 21';22, 22'), durch die der Laserstrahl in seiner Phasenlage verschiebbar und in seiner Polarisationsrichtung verdrehbar ist, und mit Mitteln zur Kompensation einer thermisch induzierten Doppelbrechung.

Die neue Anordnung ist dadurch gekennzeichnet,
- daß die Modulatorkristalle (21, 21'; 22, 22') bei vorgegebener Aperturflächengröße mit einer rechteckigen Apertur (23) ausgeführt sind, wobei jeweils die kürzere Seite dieser rechteckigen Apertur (23) senkrecht zu den Elektroden (31, 31'; 32, 32') aufweisenden Außenflächen des Kristalls (21, 21'; 22, 22') verläuft,
- daß im Laserstrahlweg (10) hinter dem ersten Modulatorkristall (21, 21') der zweite Modulatorkristall als Kompensationskristall (22, 22') mit gleicher geometrischer Ausrichtung angeordnet ist und
- daß im Laserstrahlweg (10) zwischen den beiden Kristallen (21, 22; 21', 22') ein Polarisations-Rotator (4, 4') vorgesehen ist, mittels welchem der Polarisationszustand des Laserstrahls zwischen dem Verlassen des ersten Kristalls (21, 21') und dem Eintreten in den zweiten Kristall (22, 22') um 90° drehbar ist.

## Beschreibung

Die Erfindung betrifft eine Anordnung zur schnellen elektro-optischen Amplituden- oder Phasen-Modulation von polarisiertem Laserlicht hoher Leistung im Hochfrequenzbereich, mit zwei im Laserstrahlweg angeordneten, optisch einachsigen Modulatorkristallen, an die jeweils über zwei an zwei einander gegenüberliegenden Außenflächen des Kristalls angebrachte Elektroden eine Modulationsspannung anlegbar ist, die in jedem Kristall ein elektrisches Feld erzeugt, durch das der die Kristalle durchlaufende Laserstrahl in seiner Phasenlage verschiebbar und in seiner Polarisationsrichtung verdrehbar ist, und mit Mitteln zur Kompensation einer thermisch induzierten, eine störende Depolarisation hervorrufenden Doppelbrechung.

Ein Problem der elektro-optischen Amplituden- und Phasenmodulation von polarisiertem Laserlicht in optisch einachsigen Kristallen ist, insbesondere bei hohen Leistungen des Laserstrahls, die Depolarisation aufgrund der durch Absorption des Laserstrahls im Modulatorkristall thermisch induzierten Doppelbrechung. Diese führt zur Störung der Wellenfronten und z.B. zu einer Verschlechterung des Extinktionsverhältnisses bei der Amplitudenmodulation. Üblicherweise wird bisher die thermisch induzierte Doppelbrechung durch einen zweiten Kristall kompensiert, dessen Kristallachse und Elektroden gegenüber dem ersten Kristall um 90° um die Laserstrahlachse gedreht sind und der die gleiche thermische Last erhält. Diese Kompensationsanordnung funktioniert ohne Aperturverlust nur bei quadratisch ausgelegter Kristallapertur, da in diesem Fall die Apertur bei der 90°-Drehung des zweiten Kristalls erhalten bleibt. Eine derartige Anordnung ist aus der Praxis bekannt und im Handel beispielsweise von der Firma Linos erhältlich.

Eine weitere einschlägige Anordnung ist bekannt aus der WO99/56168. Bei dieser Anordnung ist ebenfalls ein zweiter Kristall als Kompensationskristall vorgesehen. Die Apertur des Kompensationskristalls ist dabei so gewählt, daß sie die Apertur des ersten Kristalls in jeder Richtung übersteigt. Der Kompensationskristall wird hier ohne Spannung betrieben und dient nur zum Ausgleich der thermisch induzierten Doppelbrechung, ohne einen Beitrag zur Modulation zu leisten.

Bei hoher Laserstrahlleistung muß die Apertur, d.h. die effektive Kristallöffnung, genügend groß gewählt werden, um nicht zu hohe Strahlintensitäten zu erhalten, die den Kristall zerstören könnten. Ein Nachteil des üblichen quadratischen Kristallquerschnitts oder der quadratischen Apertur ist dabei, daß die Elektroden einen entsprechend großen Abstand haben müssen. Bei einem zweiten Kristall mit einer Apertur, die die Apertur des ersten Kristalls in jeder Richtung überragt, entsteht der Nachteil, daß nur der erste Kristall aktiv ist. Dies führt in beiden Fällen nachteilig dazu, daß eine entsprechend hohe Lambda/4- bzw. Lambda/2-Spannung erforderlich ist. Die Lambda/2-Spannung ist diejenige Spannung, bei welcher der außerordentliche Strahl gerade eine Phasenverschiebung von Lambda/2 gegenüber dem ordentlichen Strahl erfährt und bei geeigneter Wahl der Eintrittspolarisationsrichtung der Polarisationsvektor im Kristall gerade um 90° gedreht wird. Die Lambda/4-Spannung wird verwendet, wenn die Phasenverschiebung Lambda/2 mit zwei hintereinandergeschalteten aktiven Kristallen erzeugt wird, und die Lambda/2-Spannung wird verwendet, wenn die Phasenverschiebung Lambda/2 mit einem einzelnen aktiven Kristall erzeugt wird. Die erforderlichen hohen Spannungen wirken sich limitierend auf die erreichbaren Modulationsfrequenzen aus, welche bei den bekannten Anordnungen mit großflächiger Apertur (z.B. 4 x 4 mm) bislang maximal im 100 kHz-Bereich erreicht werden.

Für die vorliegende Erfindung stellt sich deshalb die Aufgabe, eine Anordnung der eingangs genannten Art zu schaffen, die die dargelegten Nachteile vermeidet und mit der insbesondere höhere Modulations- oder Schaltfrequenzen bei großflächiger Apertur und bei gleichzeitiger Kompensation der thermisch induzierten Doppelbrechung ohne Aperturverlust erreicht werden.

Die Lösung der Aufgabe gelingt erfindungsgemäß mit einer Anordnung der eingangs genannten Art, die dadurch gekennzeichnet ist,
- daß die Modulatorkristalle bei vorgegebener Aperturflächengröße mit einer rechteckigen Apertur ausgeführt sind, wobei jeweils die kürzere Seite dieser rechteckigen Apertur senkrecht zu den die Elektroden aufweisenden Außenflächen des Kristalls verläuft,
- daß im Laserstrahlweg hinter dem ersten Modulatorkristall der zweite Modulatorkristall als Kompensationskristall mit gleicher geometrischer Ausrichtung angeordnet ist und
- daß im Laserstrahlweg zwischen den beiden Kristallen ein Polarisations-Rotator vorgesehen ist, mittels welchem der Polarisationszustand des Laserstrahls zwischen dem Verlassen des ersten Kristalls und dem Eintreten in den zweiten Kristall um 90° drehbar ist.

Bei der erfindungsgemäßen Anordnung bleibt die Aperturflächengröße erhalten, jedoch wird der Abstand der Elektroden zueinander vermindert. Dadurch wird erreicht, daß die Lambda/4- oder Lambda/2-Spannung reduziert werden kann, wobei die Spannungsreduzierung sich proportional zur Reduzierung des Elektrodenabstandes verhält. Die Spannungen können so auf einen Bruchteil der bisher üblichen und erforderlichen Spannungen reduziert werden, wodurch die Treiberelektroniken zur Erzeugung der Modulationsspannungen mit einem vertretbaren Aufwand für deutlich höhere Frequenzen realisiert werden können, die bisher für Modulatoren mit großer quadratischer Apertur nicht erreichbar waren. Erfindungsgemäß wird hier außerdem durch den Rotator die Polarisationsebene des Laserstrahls, unabhängig von dessen Ausgangspolarisation, gerade um 90° gedreht. Es wird hier also anstatt einer beim Stand der Technik vorgesehenen Drehung des zweiten Kristalls eine Drehung der Polarisation angewendet. Auf diese Weise können die beiden optisch in Reihe geschalteten Kristalle geometrisch gleich mit ihren zueinander passenden rechteckigen Aperturen ausgerichtet werden.

Um eine optimale Nutzung der Anordnung zu erzielen, ist bevorzugt vorgesehen, daß die beiden Kristalle eine untereinander gleiche Apertur ohne Aperturverschnitt aufweisen. Ferner wird bevorzugterweise zur Ausnutzung der vollen Apertur mit einem elliptisch oder möglichst rechteckig geformten Laserstrahl gearbeitet. Dieses Laserstrahl-Querschnittsprofil läßt sich beispielsweise mit einer Zylinderlinsenanordnung erzeugen.

Bevorzugt liegt das Seitenlängenverhältnis der rechteckigen Apertur zwischen 1:4 und 1:10, besonders bevorzugt zwischen 1:6 und 1:8. Dabei wird bei vorgegebener Aperturfläche eine um so größere Reduzierung der Modulationsspannung erreicht, je größer der Unterschied zwischen der kürzeren und der längeren Seite der rechteckigen Apertur ist. Je nach Anwendung der Anordnung kann eine Begrenzung dadurch eintreten, daß der Laserstrahl noch eine technisch nutzbare Querschnittsflächenform mit nicht zu extrem unterschiedlichen Seitenlängen behalten soll.

Eine alternative Weiterbildung der Anordnung besteht darin, daß für die Laserstrahlführung und -modulation mindestens ein Wellenleiter vorgesehen ist und daß das Seitenlängenverhältnis der rechteckigen Apertur kleiner als 1:10 ist. Dabei sind bei Wellenleitern auch noch wesentlich extremere Seitenlängenverhältnisse möglich.

In einer Weiterbildung der Anordnung ist vorgesehen, daß der Modulatorkristall und der Kompensationskristall räumlich voneinander getrennt in einem geradlinigen Laserstrahlweg hintereinander mit dazwischen positioniertem Rotator angeordnet sind. Hierdurch wird insbesondere erreicht, daß jeder Kristall nur einmal vom Laserstrahl durchlaufen wird, wodurch die thermische Belastung entsprechend begrenzt bleibt.

Alternativ dazu sieht eine andere Ausführung der Anordnung vor, daß der Modulatorkristall und der Kompensationskristall als ein einstückiger, einzelner Kristall ausgebildet sind und daß der Laserstrahlweg zunächst in einer ersten Richtung durch den Kristall und dann nach einer Umlenkung um 180° in umgekehrter Richtung durch denselben Kristall verläuft. Der Vorteil dieser Anordnung besteht darin, daß nur ein einzelner Kristall erforderlich ist, allerdings ist dieser thermisch höher belastet als dies zwei einzelne Kristalle in der zuvor erläuterten Anordnung sind.

Um auch bei der vorstehend beschriebenen alternativen Anordnung die thermische Belastung des einzelnen Kristalls auf ein zuträgliches Maß zu begrenzen, ist in weiterer Ausgestaltung vorgesehen, daß der Modulatorkristall und der Kompensationskristall als zwei benachbarte Bereiche des einstückigen Kristalls ausgebildet sind, wobei vorzugsweise der Kristall im Vergleich zu einer Anordnung mit zwei separaten Kristallen für eine gleiche optische Belastbarkeit mit doppelter Aperturfläche ausgeführt ist, daß jedem Kristallbereich ein eigenes Elektrodenpaar zugeordnet ist und daß der Laserstrahlweg zunächst durch den ersten Kristallbereich und dann nach einer Umlenkung um 180° und unter Parallelversatz in umgekehrter Richtung durch den zweiten Kristallbereich verläuft.

Für die Ausführung der erfindungsgemäßen Anordnung, die nur einen einzelnen Kristall enthält, ist in einer ersten Ausgestaltung bevorzugt vorgesehen, daß der Laserstrahlweg sowohl vor als auch nach seiner Umlenkung um 180° durch den Rotator verläuft, wobei der Rotator so ausgeführt ist, daß der Polarisationszustand des Laserstrahls bei jedem Durchlauf durch den Rotator um jeweils 45° und in der Summe der beiden Durchläufe um 90° drehbar ist.

Alternativ ist vorgesehen, daß der Laserstrahlweg nur vor seiner Umlenkung oder nur nach seiner Umlenkung um 180° durch den Rotator verläuft, wobei der Rotator so ausgeführt ist, daß der Polarisationszustand des Laserstrahls bei diesem einen Durchlauf durch den Rotator um 90° drehbar ist. Bei dieser Ausführung ist es erforderlich, den Laserstrahlweg so zu führen, daß der Hinweg und der Rückweg des Laserstrahls einen Versatz aufweisen, so daß der Laserstrahl nur auf seinem Hinweg oder nur auf seinem Rückweg den Rotator durchläuft.

Für die Ausführungen, bei denen eine Umlenkung des Laserstrahlwegs vorgesehen ist, weist die Anordnung bevorzugt einen aus zwei 90°-Umlenkspiegeln gebildeten 180°-Retrospiegel auf.

Um eine effiziente Modulation des Laserstrahls zu erreichen, bei der sich die Modulationswirkungen der beiden Kristalle addieren, ist zweckmäßig das elektrische Feld im ersten Kristall oder im ersten Kristallbereich dem elektrischen Feld im zweiten Kristall oder im zweiten Kristallbereich entgegengesetzt gerichtet.

Für den in der erfindungsgemäßen Anordnung eingesetzten Rotator ist bevorzugt vorgesehen, daß dieser durch eine Quarzrotatorplatte oder einen Faradayrotator gebildet ist. Mit beiden Rotatoren läßt sich die gewünschte Drehung der Polarisationsrichtung des Laserstrahls um 90° oder 45°, je nach Ausführung der Anordnung, erreichen. Der Drehungswinkel hängt im wesentlichen von der Länge des Rotators, im Falle des Faraday-Rotators auch vom angelegten Magnetfeld, ab.

Um thermisch bedingte Funktionsungenauigkeiten der Anordnung möglichst gering zu halten, schlägt die Erfindung vor, daß der erste Kristall und der zweite Kristall oder der erste und zweite Kristallbereich des einstückigen, einzelnen Kristalls auf einer gemeinsamen Wärmesenke angeordnet sind. So wird gewährleistet, daß, zumindest ohne Laserstrahl, in allen Kristallen bzw. Kristallbereichen gleiche thermische Verhältnisse herrschen. Störungen durch unterschiedliche thermische Verhältnisse in den verschiedenen Kristallen oder verschiedenen Kristallbereichen werden so vermindert.

Als alternative Möglichkeit, die thermisch bedingten Funktionsungenauigkeiten der Anordnung möglichst gering zu halten, schlägt die Erfindung vor, daß der erste Kristall und der zweite Kristall oder der erste und zweite Kristallbereich des einstückigen, einzelnen Kristalls auf zwei getrennten Wärmesenken, also auf je einer eigenen Wärmesenke, angeordnet sind. Auf diese Weise wird die Möglichkeit geschaffen, thermische Kristall-Unsymmetrien ausgleichen zu können. Störungen durch unterschiedliche thermische Verhältnisse in den verschiedenen Kristallen oder verschiedenen Kristallbereichen werden so weiter vermindert.

Weiter ist gemäß Erfindung bevorzugt vorgesehen, daß das Kristallmaterial für den Modulatorkristall und für den Kompensationskristall oder ggf. für den einstückigen, einzelnen Kristall Rubidium-Titanyl-Phosphat (RTP), Kalium-Dideuterium-Phosphat (KDP) oder Beta-Barium-Borat (BBO) ist.

Vorteilhaft anwendbar ist die Anordnung gemäß Erfindung beispielsweise für die Umformung, die Bearbeitung, die Formgebung, die Gravur oder die Beschriftung eines Werkstücks, vorzugsweise eines Flexodruckzylinders oder eines Tiefdruckzylinders.

Ein weiterer vorteilhafter Anwendungsbereich der Anordnung gemäß Erfindung, bei dem die modulierte Laserstrahlung im sichtbaren Spektralbereich liegt, ist die Displaytechnik oder Laserprojektionstechnik.

Zwei Ausführungsbeispiele der erfindungsgemäßen Anordnung werden im folgenden anhand einer Zeichnung erläutert. Die Figuren der Zeichnung zeigen:
- Figur 1: eine erste Anordnung in einer schematischen perspektivischen Darstellung,
- Figur 2: die optischen Wirkungen der Anordnung aus Figur 1 in einer schematischen perspektivischen Darstellung und
- Figur 3: die Anordnung in einer zweiten Ausführung, ebenfalls in einer schematischen perspektivischen Darstellung.

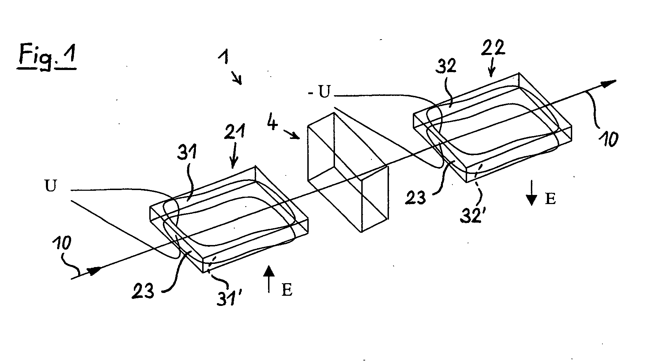

In der Figur 1 der Zeichnung ist in schematischer perspektivischer Darstellung eine erste Ausführung einer Anordnung 1 zur schnellen elektro-optischen Modulation von polarisiertem Laserlicht dargestellt. Der Weg des Laserstrahls durch die Anordnung 1 ist durch die durchgezogene Strahllinie 10 dargestellt. Die dargestellten Komponenten der Anordnung 1 bewirken zunächst eine Modulation des Polarisationszustandes des Laserstrahls. Damit aus der Polarisationszustands-Modulation eine echte Amplituden-Modulation wird, muß der Laserstrahl zusätzlich noch einen Polarisations-Analysator durchlaufen, der nur linear polarisiertes Licht einer Polarisationsrichtung durchläßt. Dieses als Analysator bekannte, selbstverständliche Bauteil ist in den Zeichnungsfiguren nicht eigens dargestellt.

Der Laserstrahl durchläuft auf seinem Laserstrahlweg 10 zunächst einen ersten Kristall 21, der ein Modulationskristall ist. Hierzu besitzt der Kristall 21 an seiner Oberseite und Unterseite jeweils eine Elektrode 31, 31', an die eine Modulationsspannung U anlegbar ist. Die Modulationsspannung U ist in einer elektronischen Einheit erzeugbar, die hier nicht dargestellt ist.

Wie die Figur 1 veranschaulicht, besitzt der Kristall 21 eine rechteckige Apertur 23, d.h. eine rechteckige Fläche, durch die der Laserstrahl auf seinem Laserstrahlweg 10 in das Innere des Kristalls 21 eintritt. Durch das zwischen den Elektroden 31, 31' erzeugte elektrische Feld E, dessen Feldrichtung hier von unten nach oben weist, wird der Laserstrahl hinsichtlich seines Polarisationszustandes moduliert, wobei die Modulation im MHz-Bereich erfolgen kann.

In Strahlrichtung gesehen hinter dem ersten Kristall 21 ist ein Polarisations-Rotator 4 angeordnet, dessen Länge und Ausrichtung so gewählt ist, daß in ihm die Polarisationsrichtung des Laserstrahls um genau 90° gedreht wird.

Weiter in Richtung des Laserstrahlweges 10 schließt sich an den Rotator 4 ein weiterer Kristall 22 an. Dieser Kristall 22 besitzt die gleiche Form und insbesondere die gleiche geometrische Ausrichtung wie der erste Kristall 21. Auch der zweite Kristall 22 dient als Modulatorkristall, wobei die wesentliche Funktion dieses Kristalls 22 aber in der Kompensation einer thermisch, insbesondere durch den Laserstrahl selbst induzierten, eine störende Depolarisation hervorrufenden Doppelbrechung besteht. Auch der Kristall 22 besitzt eine rechteckige Apertur 23, die mit der Apertur 23 des ersten Kristalls 21 in Größe und Ausrichtung übereinstimmt. Auf diese Weise passen die Aperturen 23 der beiden Kristalle 21, 22 genau zueinander, so daß durch die Hintereinanderschaltung der beiden Kristalle 21, 22 kein Aperturverlust eintritt.

An der Oberseite und Unterseite des zweiten Kristalls 22 sind wieder Elektroden 32, 32' angebracht, die hier mit einer Modulationsspannung -U versorgt werden, wodurch sich zwischen den Elektroden 32, 32' ein elektrisches Feld E ergibt, dessen Feldrichtung von oben nach unten, also entgegengerichtet zum elektrischen Feld im Kristall 21, verläuft. Hierdurch addieren sich die Modulationswirkungen der beiden Kristalle 21, 22, so daß eine wirksame Modulation des Polarisationszustandes des durch die Anordnung 1 hindurchlaufenden Laserstrahls erreicht wird.

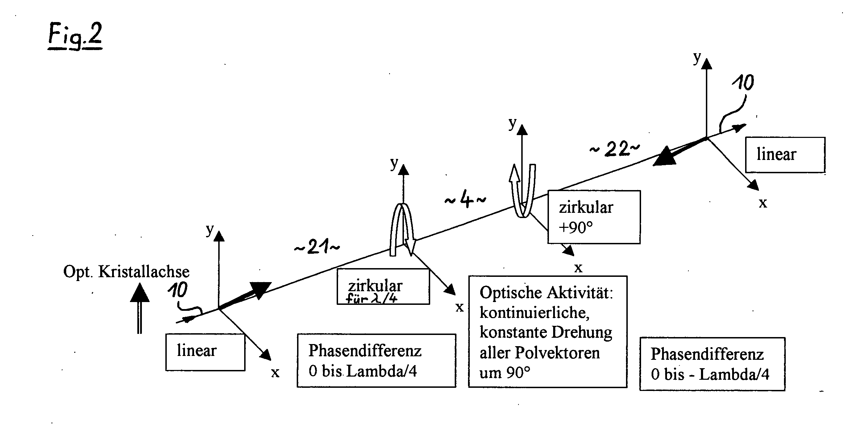

Figur 2 der Zeichnung veranschaulicht die optischen Wirkungen der Kristalle 21, 22 und des dazwischen angeordneten Rotators 4 am Beispiel eines Laserstrahls mit einem linearen Eingangs-Polarisationszustand unter 45° zur Kristallachse.

Der Laserstrahl kommt in Figur 2 von links und besitzt hier eine unter 45° zur Kristallachse geneigte lineare Polarisation, die durch den dicken schwarzen Pfeil dargestellt ist. Beim Durchlauf durch den ersten Kristall 21 erfahren die x- und y-Komponente des Polarisationsvektors des Laserstrahls zueinander eine Phasenverschiebung im Bereich zwischen 0 und Lambda/4, wobei die Phasendifferenz von der Größe der angelegten Modulationsspannung abhängt. Im Falle von Lambda/4 besitzt der Laserstrahl nach dem Durchlaufen des ersten Kristalls 21 eine zirkulare Polarisation, für Werte im Bereich zwischen Null und Lambda/4 eine elliptische Polarisation.

Beim Durchlaufen des Polarisations-Rotators 4 erfahren alle Polarisationskomponenten des Laserstrahls eine Drehung ihrer Richtung um 90°, was hier durch den entsprechend eingezeichneten gebogenen Pfeil veranschaulicht ist. Dies heißt, daß die vormals in x-Richtung zeigende Polarisationskomponente jetzt in -y-Richtung und die vormals in y-Richtung zeigende Polarisationskomponente nun in x-Richtung zeigt.

In dem abschließend vom Laserstrahl auf seinem Strahlweg 10 durchlaufenen zweiten Kristall 22 erfährt der Laserstrahl eine weitere Modulation seines Polarisationszustandes, wobei hier die erneute Phasenverschiebung zwischen der x- und der y-Komponente von Null bis minus Lambda/4 reicht. Die Modulationsspannung wird hier so angelegt, daß sich die Phasenverschiebungen des ersten und des zweiten Kristalls 21, 22 zu einer Gesamtverschiebung der x- und y-Startpolarisationskomponenten zwischen Null und Lambda/2 addieren. Hinter dem zweiten Kristall 22 besitzt dann der Laserstrahl 10 im dargestellten Beispiel mit einer an beiden Kristallen 21, 22 angelegten Lambda/4-Spannung wieder eine lineare Polarisation, nun aber mit einer um 180° verdrehten Polarisationsrichtung, wie hier wieder durch einen dicken schwarzen Pfeil veranschaulicht ist. Liegt an beiden Kristallen 21, 22 keine Spannung an, ergibt sich, allein durch den Rotator 4 bewirkt, eine nur um 90° verdrehte lineare Polarisationsrichtung; bei Zwischenwerten der Spannung ergeben sich elliptische Polarisationsrichtungen.

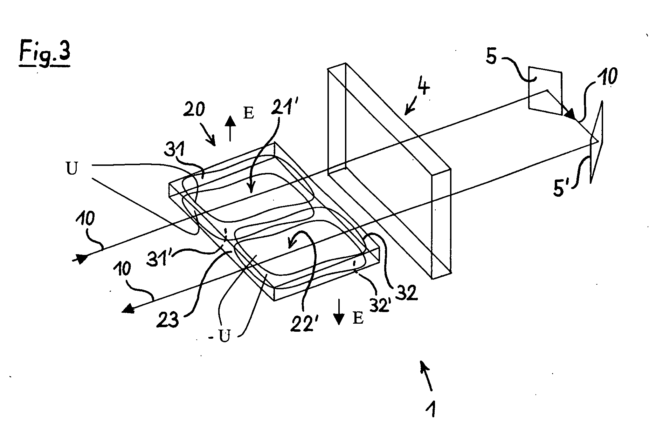

Figur 3 der Zeichnung zeigt in gleicher Darstellungsweise wie die Figur 1 eine zweite Ausführung der Anordnung 1 zur schnellen elektro-optischen Modulation von polarisiertem Laserlicht. Das wesentliche Charakteristikum der Anordnung 1 gemäß Figur 3 besteht darin, daß hier nur ein einzelner, einstückiger Kristall 20 vorhanden ist, der die Funktionen der beiden Kristalle 21, 22 bei der Anordnung 1 gemäß Figur 1 in sich vereint. Hierzu ist der Laserstrahlweg 10 so geführt, daß er zunächst in einer ersten Richtung und anschließend in einer zweiten Richtung den einzelnen Kristall 20 durchläuft. Gemäß Figur 3 kommt der Laserstrahl zunächst von links her auf seinem Laserstrahlweg 10 und tritt in den in der Zeichnung hinteren Bereich 21' des Kristalls 20 ein und durchläuft diesen in geradliniger Richtung. An der Oberseite und Unterseite des hinteren Bereichs 21' des Kristalls 20 sind wieder Elektroden 31, 31' angebracht, die mit der Modulationsspannung U beaufschlagt werden. Die Richtung des elektrischen Feldes E verläuft dabei in dem hinteren Kristallbereich 21 von unten nach oben, also genauso wie im ersten Kristall 21 der Anordnung 1 in Figur 1.

Nach dem Austritt aus dem hinteren Kristallbereich 21' geht der Laserstrahlweg 10 durch einen Polarisations-Rotator 4'. Dieser Rotator 4' bewirkt eine Drehung der Polarisationsrichtung des Laserstrahls um genau 45°, also um die Hälfte des Drehwinkels des Rotators 4 der Anordnung gemäß Figur 1.

In seinem weiteren Verlauf wird der Laserstrahl auf seinem Strahlweg 10 durch zwei 90°-Umlenkspiegel 5, 5' um insgesamt 180° umgelenkt sowie mit einem Parallelversatz versehen. Der rücklaufende Teil des Strahlwegs 10 verläuft also parallel und mit Abstand zum hinlaufenden Teil des Laserstrahlwegs 10. Der rücklaufende Teil des Laserstrahlwegs 10 führt vom zweiten 90°-Umlenkspiegel 5' kommend zunächst erneut durch den Polarisations-Rotator 4', wo die Polarisationsrichtung des Laserstrahls eine weitere Drehung um nochmals 45° erfährt, so daß er insgesamt eine Drehung um 90° erfährt.

Nachfolgend durchläuft der Laserstrahl den gemäß Figur 3 vorderen Kristallbereich 22', wo er eine weitere Modulation durch die über ein weiteres Paar von Elektroden 32, 32' zugeführte Modulationsspannung -U erfährt. Das elektrische Feld E ist in dem vorderen Kristallbereich 22' entgegengerichtet zum elektrischen Feld E im hinteren Bereich 21'. Hierdurch addieren sich die Modulationswirkungen der Kristallbereiche 21' und 22' wirksam zu einer gewünschten Gesamt-Modulation.

Auch bei dem Kristall 20 ist die Apertur 23 rechteckig, wobei die Gesamt-Apertur des Kristalls 20 hier ohne Vergrößerung des Elektrodenabstandes doppelt so groß ist wie die Apertur der einzelnen Kristalle 21, 22 der Anordnung 1 gemäß Figur 1. Dadurch wird bei gleicher Laserstrahlintensität auch in dem einzelnen Kristall 20 keine höhere thermische Belastung hervorgerufen.

Um über die Kompensation durch den zweifachen Kristalldurchlauf des Laserstrahls hinaus eine weitere Reduzierung von störenden thermischen Einflüssen zu erzielen, können die in Reihe angeordneten Kristalle 21, 22 bzw. die Kristallbereiche 21', 22' entweder auf einer gemeinsamen Wärmesenke oder auf jeweils einer eigenen Wärmesenke, die hier nicht eigens dargestellt ist/sind, angeordnet sein.

## Patentansprüche

1. Anordnung (1) zur schnellen elektro-optischen Amplituden- oder Phasen-Modulation von polarisiertem Laserlicht hoher Leistung im Hochfrequenzbereich, mit zwei im Laserstrahlweg (10) angeordneten, optisch einachsigen Modulatorkristallen (21, 21';22, 22'), an die jeweils über zwei an zwei einander gegenüberliegenden Außenflächen des Kristalls (21, 21'; 22, 22') angebrachte Elektroden (31, 31'; 32, 32') eine Modulationsspannung anlegbar ist, die in jedem Kristall (21, 21'; 22, 22') ein elektrisches Feld erzeugt, durch das der die Kristalle (21, 21'; 22, 22') durchlaufende Laserstrahl in seiner Phasenlage verschiebbar und in seiner Polarisationsrichtung verdrehbar ist, und mit Mitteln zur Kompensation einer thermisch induzierten, eine störende Depolarisation hervorrufenden Doppelbrechung,
**dadurch gekennzeichnet,**
- **daß** die Modulatorkristalle (21, 21'; 22, 22') bei vorgegebener Aperturflächengröße mit einer rechteckigen Apertur (23) ausgeführt sind, wobei jeweils die kürzere Seite dieser rechteckigen Apertur (23) senkrecht zu den die Elektroden (31, 31'; 32, 32') aufweisenden Außenflächen des Kristalls (21, 21'; 22, 22') verläuft,
- **daß** im Laserstrahlweg (10) hinter dem ersten Modulatorkristall (21, 21') der zweite Modulatorkristall als Kompensationskristall (22, 22') mit gleicher geometrischer Ausrichtung angeordnet ist und
- **daß** im Laserstrahlweg (10) zwischen den beiden Kristallen (21, 22; 21', 22') ein Polarisations-Rotator (4, 4') vorgesehen ist, mittels welchem der Polarisationszustand des Laserstrahls zwischen dem Verlassen des ersten Kristalls (21, 21') und dem Eintreten in den zweiten Kristall (22, 22') um 90° drehbar ist.

2. Anordnung nach Anspruch 1, **dadurch gekennzeichnet, daß** die beiden Kristalle (21, 21'; 22, 22') eine untereinander gleiche Apertur (23) ohne Aperturverschnitt aufweisen.

3. Anordnung nach Anspruch 1 oder 2, **dadurch gekennzeichnet, daß** das Seitenlängenverhältnis der rechteckigen Apertur (23) zwischen 1:4 und 1:10, vorzugsweise zwischen 1:6 und 1:8, liegt.

4. Anordnung nach Anspruch 1 oder 2, **dadurch gekennzeichnet, daß** für die Laserstrahlführung und -modulation mindestens ein Wellenleiter vorgesehen ist und daß das Seitenlängenverhältnis der rechteckigen Apertur (23) kleiner als 1:10 ist.

5. Anordnung nach einem der vorangehenden Ansprüche, **dadurch gekennzeichnet, daß** der Modulatorkristall (21) und der Kompensationskristall (22) räumlich voneinander getrennt in einem geradlinigen Laserstrahlweg (10) hintereinander mit dazwischen positioniertem Rotator (4) angeordnet sind.

6. Anordnung nach einem der Ansprüche 1 bis 3, **dadurch gekennzeichnet, daß** der Modulatorkristall (21') und der Kompensationskristall (22') als ein einstückiger, einzelner Kristall (20) ausgebildet sind und daß der Laserstrahlweg (10) zunächst in einer ersten Richtung durch den Kristall (20) und dann nach einer Umlenkung um 180° in umgekehrter Richtung durch denselben Kristall (20) verläuft.

7. Anordnung nach Anspruch 6, **dadurch gekennzeichnet, daß** der Modulatorkristall (21') und der Kompensationskristall (22') als zwei benachbarte Bereiche des einstückigen Kristalls (20) ausgebildet sind, wobei vorzugsweise der Kristall (20) im Vergleich zu einer Anordnung (1) mit zwei separaten Kristallen (21, 22) für eine gleiche optische Belastbarkeit mit doppelter Aperturfläche ausgeführt ist, daß jedem Kristallbereich (21', 22') ein eigenes Elektrodenpaar (31, 31';32, 32') zugeordnet ist und daß der Laserstrahlweg (10) zunächst durch den ersten Kristallbereich (21') und dann nach einer Umlenkung um 180° und unter Parallelversatz in umgekehrter Richtung durch den zweiten Kristallbereich (22') verläuft.

8. Anordnung nach Anspruch 6 oder 7, **dadurch gekennzeichnet, daß** der Laserstrahlweg (10) sowohl vor als auch nach seiner Umlenkung um 180° durch den Rotator (4') verläuft, wobei der Rotator (4') so ausgeführt ist, daß der Polarisationszustand des Laserstrahls bei jedem Durchlauf durch den Rotator (4') um jeweils 45° und in der Summe der beiden Durchläufe um 90° drehbar ist.

9. Anordnung nach Anspruch 7, **dadurch gekennzeichnet, daß** der Laserstrahlweg (10) nur vor seiner Umlenkung oder nur nach seiner Umlenkung um 180° durch den Rotator (4) verläuft, wobei der Rotator (4) so ausgeführt ist, daß der Polarisationszustand des Laserstrahls bei diesem einen Durchlauf durch den Rotator (4) um 90° drehbar ist.

10. Anordnung nach einem der Ansprüche 6 bis 9, **dadurch gekennzeichnet, daß** diese einen aus zwei 90°-Umlenkspiegeln (5, 5') gebildeten 180°-Retrospiegel aufweist.

11. Anordnung nach einem der vorangehenden Ansprüche, **dadurch gekennzeichnet, daß** das elektrische Feld im ersten Kristall (21) oder im ersten Kristallbereich (21') dem elektrischen Feld im zweiten Kristall (22) oder im zweiten Kristallbereich (22') entgegengesetzt gerichtet ist.

12. Anordnung nach einem der vorangehenden Ansprüche, **dadurch gekennzeichnet, daß** der Rotator (4, 4') durch eine Quarzrotatorplatte oder einen Faradayrotator gebildet ist.

13. Anordnung nach einem der vorangehenden Ansprüche, **dadurch gekennzeichnet, daß** der erste Kristall (21) und der zweite Kristall (22) oder der erste und zweite Kristallbereich (21', 22') des einstückigen, einzelnen Kristalls (20) auf einer gemeinsamen Wärmesenke angeordnet sind.

14. Anordnung nach einem der Ansprüche 1 bis 12, **dadurch gekennzeichnet, daß** der erste Kristall (21) und der zweite Kristall (22) oder der erste und zweite Kristallbereich (21', 22') des einstückigen, einzelnen Kristalls (20) auf zwei getrennten Wärmesenken, also auf je einer eigenen Wärmesenke, angeordnet sind.

15. Anordnung nach einem der vorangehenden Ansprüche, **dadurch gekennzeichnet, daß** das Kristallmaterial für den Modulatorkristall (21) und für den Kompensationskristall (22) oder ggf. für den einstückigen, einzelnen Kristall (20) Rubidium-Titanyl-Phosphat (RTP), Kalium-Dideuterium-Phosphat (KDP) oder Beta-Barium-Borat (BBO) ist.

16. Anordnung nach einem der vorangehenden Ansprüche, **dadurch gekennzeichnet, daß** sie Teil einer Einrichtung für die Umformung, die Bearbeitung, die Formgebung, die Gravur oder die Beschriftung eines Werkstücks, vorzugsweise eines Flexodruckzylinders oder eines Tiefdruckzylinders, ist.

17. Anordnung nach einem der Ansprüche 1 bis 14, **dadurch gekennzeichnet, daß** sie Teil einer Einrichtung für die Displaytechnik oder Laserprojektionstechnik ist, wobei die modulierte Laserstrahlung im sichtbaren Spektralbereich liegt.
